# EUROPEAN PATENT SPECIFICATION

(11) **EP 3 450 088 B1**
(45) Date of publication and mention of the grant of the patent: **06.07.2022**
(21) Application number: 18190689.2
(22) Date of filing: 24.08.2018
(51) Int. Cl.: B23P 13/02, B23B 5/28

(54) **WHEEL LIGHTWEIGHT MACHINING FIXTURE AND METHOD**
LEICHTGEWICHTIGE RADBEARBEITUNGSBEFESTIGUNG UND -VERFAHREN
ACCESSOIRE ET PROCÉDÉ D'USINAGE LÉGER DE ROUE

(30) Priority: 27.08.2017 CN 201710746876
(43) Date of publication of application: 06.03.2019
(73) Proprietor: Citic Dicastal Co., Ltd., 066011 Quinhuangdao, Heibei (CN)
(72) Inventor: Liu, Huiying, Qinhuangdao, Heibei 066011 (CN); Li, Changhai, Qinhuangdao, Heibei 066011 (CN); Cai, Weimin, Qinhuangdao, Heibei 066011 (CN); Wang, Yajun, Qinhuangdao, Heibei 066011 (CN)
(74) Representative: Gong, Jinping

(56) References cited:
- WO-A1-2006/137088
- WO-A1-2014/087332
- WO-A2-2017/085491
- JP-A- 2007 030 069

## Description

### Field of the Invention

The present invention relates to the technical fields of wheel weight reduction and lightweight manufacturing, specifically to a wheel lightweight machining fixture and a lightweight machining method.

### Background of the Invention

On the premise of meeting the safety performance, wheels are gradually developed toward lightweight, and the lightweight of the wheels is not only beneficial to reducing the resistance and oil consumption of automobiles, but also improves the rotating and braking performance of the wheels. For wheel manufacturing enterprises, the weights of wheels are reduced, and aluminum scraps can be recycled to reduce the manufacturing cost, so lightweight manufacturing of wheels is an important technology. In the machining process of wheels, minimum entity manufacturing is an effective way for realizing lightweight production of wheels, i.e., the sizes of wheels are controlled according to minimum entities. The rim wall thicknesses and spoke thicknesses of wheels are key parts influencing the weights of the wheels, so in order to realize lightweight machining, minimum entity control must be performed on the rim thicknesses and the spoke thicknesses.

JP 2007-30069 A relates to a cutting method and a cutting apparatus for vehicle wheel. In a first cutting process, the rim rear part machining area, a first inner surface machining area and a second inner surface machining area are concurrently cut, and in a second cutting process, the design surface and the rim front machining area are concurrently cut, via respective cutting devices.

### Summary of the Invention

The present invention is aimed at providing a wheel lightweight machining fixture and a lightweight machining method. A measurement feedback system is integrated into the manufacturing process, so that minimum entity control of the rim wall thickness and the spoke thickness is realized on a wheel having the front side not machined in the first stage turning process, and lightweight machining of the wheel is realized.

In order to fulfill the above purpose, the present invention adopts the following technical solution: A wheel lightweight machining fixture, comprising
a rotating chuck for clamping a wheel, on which radial positioning blocks for radial positioning of first stage turning of a wheel, axial positioning blocks for axial positioning of first stage turning, and corner cylinder pressure claws for pressing the wheel are uniformly distributed,
a vertical lathe I turret, on which an inner rim turning tool for turning the inner rim of the wheel, an outer rim turning tool for turning the outer rim of the wheel and a clamping base are mounted, and
a vertical lathe II turret, on which a central hole flange turning tool for turning the central hole and flange surface of the wheel and a spoke back cavity turning tool for turning the spoke back cavity are mounted,
characterized in that
two grooves are bilaterally distributed in the rotating chuck, the electric cylinder and the guide rail are fixedly mounted in the left groove, the slide block is mounted on the guide rail, the output end of the electric cylinder is connected with the slide block, the linear motor I is fixedly mounted on the slide block, the ultrasonic thickness measuring sensor I is mounted at the output end of the linear motor I, and the piezoelectric sensor I is integrated inside the ultrasonic thickness measuring sensor I;
wherein when the electric cylinder drives the slide block to move along the guide rail, the position where the ultrasonic thickness measuring sensor I is in contact with a wheel spoke can be adjusted, so that the spoke thicknesses at different positions can be detected,
wherein the clamping base is mounted on the vertical lathe I turret, the linear motor II is mounted on the clamping base, the ultrasonic thickness measuring sensor II is mounted at the output end of the linear motor II, and the piezoelectric sensor II is integrated inside the ultrasonic thickness measuring sensor II; through motion of the turrets, the ultrasonic thickness measuring sensor II can contact the outer rim of the wheel and detect the rim wall thickness.

In a preferred embodiment, three radial positioning blocks 6 for radial positioning of first stage turning of a wheel, three axial positioning blocks 9 for axial positioning of first stage turning and three corner cylinder pressure claws 10 for pressing the wheel are uniformly distributed on the rotating chuck 1. Two grooves are bilaterally distributed in the rotating chuck 1, the electric cylinder 2 and the guide rail 3 are fixedly mounted in the left groove, the slide block 4 is mounted on the guide rail 3, the output end of the electric cylinder 2 is connected with the slide block 4, the linear motor I 5 is fixedly mounted on the slide block 4, the ultrasonic thickness measuring sensor I 8 is mounted at the output end of the linear motor 15, and the piezoelectric sensor I 7 is integrated inside the ultrasonic thickness measuring sensor I 8. When the electric cylinder 2 drives the slide block 4 to move along the guide rail 3, the position where the ultrasonic thickness measuring sensor I 8 is in contact with a wheel spoke can be adjusted, so that the spoke thicknesses at different positions can be detected.

The inner rim turning tool 12 and the outer rim turning tool 13 are mounted on the vertical lathe I turret 11 for turning the inner rim and outer rim of the wheel. The central hole flange turning tool 19 for turning the central hole and flange surface of the wheel and the spoke back cavity turning tool 20 for turning the spoke back cavity are mounted on the vertical lathe II turret 18. The clamping base 14 is mounted on the vertical lathe I turret 11, the linear motor II 15 is mounted on the clamping base 14, the ultrasonic thickness measuring sensor II 17 is mounted at the output end of the linear motor II 15, and the piezoelectric sensor II 16 is integrated inside the ultrasonic thickness measuring sensor II 17. Through motion of the turrets, the ultrasonic thickness measuring sensor II 17 can contact the outer rim of the wheel and detect the rim wall thickness.

A wheel lightweight machining method includes the following procedures.
(1) According to the requirement of the radial detection position of the spoke thickness, the radial position of the ultrasonic thickness measuring sensor I 8 is adjusted via the electric cylinder 2.
(2) A wheel having the front side downward and the rim upward is clamped onto the rotating chuck 1, the wheel spoke is required to face the ultrasonic thickness measuring sensor I 8 during clamping.
(3) The wheel is turned by adopting a machining program of wheel size mid-value compilation, the outer rim turning tool 13 on the vertical lathe I turret 11 turns the outer rim, the inner rim turning tool 12 turns the inner rim, the central hole flange turning tool 19 on the vertical lathe II turret 18 turns the central hole and the flange surface, and the spoke back cavity turning tool 20 turns the spoke back cavity.
(4) After turning is completed, the vertical lathe I turret 11 moves, the position of the ultrasonic thickness measuring sensor II 17 is adjusted to face the outer rim of the wheel, then, the linear motor II 15 is started to drive the ultrasonic thickness measuring sensor II 17 to approach the outer rim of the wheel, when the ultrasonic thickness measuring sensor II 17 contacts the outer rim of the wheel, the piezoelectric sensor II 16 picks up a signal, the linear motor II 15 stops moving, and at the moment, the ultrasonic thickness measuring sensor II 17 begins working and detects the rim wall thickness; when the rim wall thickness is detected, the linear motor I 5 is started to drive the ultrasonic thickness measuring sensor I 8 to approach the wheel spoke; when the ultrasonic thickness measuring sensor I 8 contacts the wheel spoke, the piezoelectric sensor I 7 picks up a signal, the linear motor II 15 stops moving, and at the moment, the ultrasonic thickness measuring sensor I 8 begins working and detects the spoke thickness.
(5) A computer compares the detected rim wall thickness and spoke thickness with minimum entity values, and feeds the differences back to a lathe as cutting depths of next precision turning.
(6) After the lathe receives cutting depth instructions, the inner rim turning tool 12 is started to precisely turn the inner rim of the wheel, and the spoke back cavity turning tool 20 is started to precisely turn the spoke back cavity; after precision turning is completed, first stage machining of the wheel is completed, and the rim wall thickness and the spoke thickness undergo minimum entity control.
(7) Finally, the wheel is transferred to a second stage lathe, and after the cap section and the remaining outer rim are turned, turning of the whole wheel is completed.

By integrating a measurement feedback system into the manufacturing process, the present invention provides a fixture and a method for minimum entity machining of the rim wall thickness and the spoke thickness of a wheel during the first stage turning process, thereby realizing lightweight manufacturing of the wheel. By adopting the fixture and the method, closed-loop control on the rim thickness and the spoke thickness can be realized when each wheel is machined, so that the control precision is high, and the requirement for continuous production is met.

### Brief Description of the Drawings

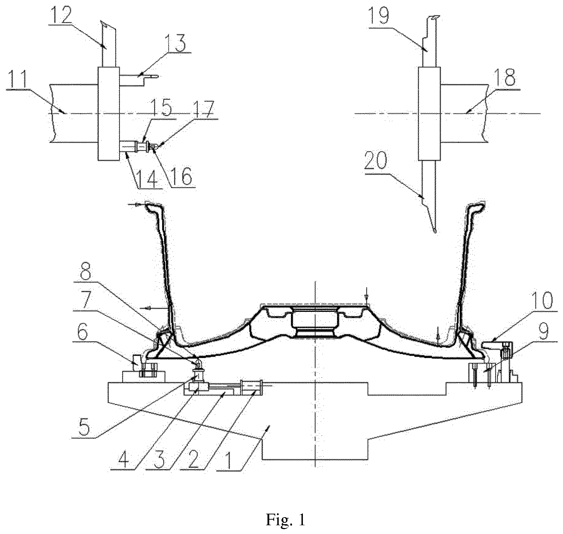

Fig. 1 is a front view of a wheel lightweight machining fixture of the present invention.

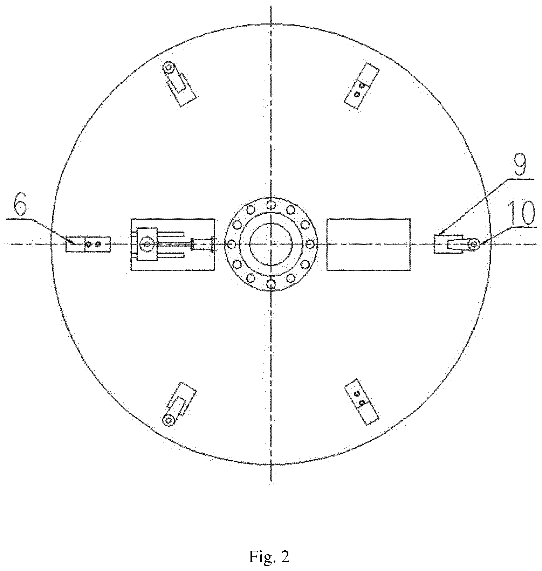

Fig. 2 is a top view of the wheel lightweight machining fixture of the present invention.

In which, 1-rotating chuck, 2-electric cylinder, 3-guide rail, 4-slide block, 5-linear motor I, 6-radial positioning block, 7-piezoelectric sensor I, 8-ultrasonic thickness measuring sensor I, 9-axial positioning block, 10-corner cylinder pressure claw, 11-vertical lathe I turret, 12-inner rim turning tool, 13-outer rim turning tool, 14-clamping base, 15-linear motor II, 16-piezoelectric sensor II, 17-ultrasonic thickness measuring sensor II, 18-vertical lathe II turret, 19-central hole flange turning tool, 20-spoke back cavity turning tool.

### Detailed Description of the Embodiments

Details and works of a specific device provided by the present invention will be given below in combination with the accompanying drawing and embodiments.

A wheel lightweight machining fixture includes a rotating chuck, an electric cylinder, a guide rail, a slide block, a linear motor I, radial positioning blocks, a piezoelectric sensor I, an ultrasonic thickness measuring sensor I, axial positioning blocks, corner cylinder pressure claws, a vertical lathe I turret, an inner rim turning tool, an outer rim turning tool, a clamping base, a linear motor II, a piezoelectric sensor II, an ultrasonic thickness measuring sensor II, a vertical lathe II turret, a central hole flange turning tool and a spoke back cavity turning tool .

Three radial positioning blocks for radial positioning of first stage turning of a wheel, three axial positioning blocks for axial positioning of first stage turning and three corner cylinder pressure claws for pressing the wheel are uniformly distributed on the rotating chuck. Two grooves are bilaterally distributed in the rotating chuck, the electric cylinder and the guide rail are fixedly mounted in the left groove, the slide block is mounted on the guide rail, the output end of the electric cylinder is connected with the slide block, the linear motor I is fixedly mounted on the slide block, the ultrasonic thickness measuring sensor I is mounted at the output end of the linear motor I, and the piezoelectric sensor I is integrated inside the ultrasonic thickness measuring sensor I. When the electric cylinder drives the slide block to move along the guide rail, the position where the ultrasonic thickness measuring sensor I is in contact with a wheel spoke can be adjusted, so that the spoke thicknesses at different positions can be detected.

The inner rim turning tool and the outer rim turning tool are mounted on the vertical lathe I turret for turning the inner rim and outer rim of the wheel. The central hole flange turning tool for turning the central hole and flange surface of the wheel and the spoke back cavity turning tool for turning the spoke back cavity are mounted on the vertical lathe II turret. The clamping base is mounted on the vertical lathe I turret, the linear motor II is mounted on the clamping base, the ultrasonic thickness measuring sensor II is mounted at the output end of the linear motor II, and the piezoelectric sensor II is integrated inside the ultrasonic thickness measuring sensor II. Through motion of the turrets, the ultrasonic thickness measuring sensor II can contact the outer rim of the wheel and detect the rim wall thickness.

A wheel lightweight machining method includes the following procedures.
(1) According to the requirement of the radial detection position of the spoke thickness, the radial position of the ultrasonic thickness measuring sensor I is adjusted via the electric cylinder.
(2) A wheel having the front side downward and the rim upward is clamped onto the rotating chuck, the wheel spoke is required to face the ultrasonic thickness measuring sensor I during clamping.
(3) The wheel is turned by adopting a machining program of wheel size mid-value compilation, the outer rim turning tool on the vertical lathe I turret turns the outer rim, the inner rim turning tool turns the inner rim, the central hole flange turning tool on the vertical lathe II turret turns the central hole and the flange surface, and the spoke back cavity turning tool turns the spoke back cavity.
(4) After turning is completed, the vertical lathe I turret moves, the position of the ultrasonic thickness measuring sensor II is adjusted to face the outer rim of the wheel, then, the linear motor II is started to drive the ultrasonic thickness measuring sensor II to approach the outer rim of the wheel, when the ultrasonic thickness measuring sensor II contacts the outer rim of the wheel, the piezoelectric sensor II picks up a signal, the linear motor II stops moving, and at the moment, the ultrasonic thickness measuring sensor II begins working and detects the rim wall thickness; when the rim wall thickness is detected, the linear motor I is started to drive the ultrasonic thickness measuring sensor I to approach the wheel spoke; when the ultrasonic thickness measuring sensor I contacts the wheel spoke, the piezoelectric sensor I picks up a signal, the linear motor II stops moving, and at the moment, the ultrasonic thickness measuring sensor I begins working and detects the spoke thickness.
(5) A computer compares the detected rim wall thickness and spoke thickness with minimum entity values, and feeds the differences back to a lathe as cutting depths of next precision turning.
(6) After the lathe receives cutting depth instructions, the inner rim turning tool is started to precisely turn the inner rim of the wheel, and the spoke back cavity turning tool is started to precisely turn the spoke back cavity; after precision turning is completed, first stage machining of the wheel is completed, and the rim wall thickness and the spoke thickness undergo minimum entity control.
(7) Finally, the wheel is transferred to a second stage lathe, and after the cap section and the remaining outer rim are turned, turning of the whole wheel is completed.

Embodiment 1: Known is a 17-inch wheel to be machined, the wall thickness of the middle rim is 4±0.25mm, the spoke is at R120mm, and the spoke thickness is 30±0.8mm. The lightweight machining method is as follows.
(1) According to the requirement of the radial detection position (R120mm) of the spoke thickness, the radial position of the ultrasonic thickness measuring sensor I 8 is adjusted to R120mm via the electric cylinder 2.
(2) The wheel having the front side downward and the rim upward is clamped onto the rotating chuck 1, wherein the wheel spoke is required to face the ultrasonic thickness measuring sensor I 8 during clamping.
(3) The wheel is turned by adopting a machining program of wheel size mid-value compilation, the outer rim turning tool 13 on the vertical lathe I turret 11 turns the outer rim, the inner rim turning tool 12 turns the inner rim, the central hole flange turning tool 19 on the vertical lathe II turret 18 turns the central hole and the flange surface, and the spoke back cavity turning tool 20 turns the spoke back cavity.
(4) After turning is completed, the vertical lathe I turret 11 moves, the position of the ultrasonic thickness measuring sensor II 17 is adjusted to face the outer rim of the wheel, then, the linear motor II 15 is started to drive the ultrasonic thickness measuring sensor II 17 to approach the outer rim of the wheel, when the ultrasonic thickness measuring sensor II 17 contacts the outer rim of the wheel, the piezoelectric sensor II 16 picks up a signal, the linear motor II 15 stops moving, and at the moment, the ultrasonic thickness measuring sensor II 17 begins working and detects the rim wall thickness; when the rim wall thickness is detected, the linear motor I 5 is started to drive the ultrasonic thickness measuring sensor I 8 to approach the wheel spoke; when the ultrasonic thickness measuring sensor I 8 contacts the wheel spoke, the piezoelectric sensor I 7 picks up a signal, the linear motor II 15 stops moving, and at the moment, the ultrasonic thickness measuring sensor I 8 begins working and detects the spoke thickness.
(5) A computer compares the detected rim wall thickness and spoke thickness with minimum entity values, wherein the detected rim wall thickness is 3.95mm, and a difference is drawn from the minimum entity size 3.75mm; the difference 0.2mm is fed back to a lathe as a cutting depth of next precision turning of the inner rim; the detected spoke thickness is 30.1mm, and a difference is drawn from the minimum entity size 29.2mm; the difference 0.9mm is fed back to the lathe as a cutting depth of next precision turning of the spoke back cavity.
(6) After the lathe receives cutting depth 0.2mm and 0.9mm instructions, the inner rim turning tool 12 is started to precisely turn the inner rim of the wheel, and the spoke back cavity turning tool 20 is started to precisely turn the spoke back cavity; after precision turning is completed, first stage machining of the wheel is completed, and the rim wall thickness and the spoke thickness undergo minimum entity control.
(7) Finally, the wheel is transferred to a second stage lathe, and after the cap section and the remaining outer rim are turned, turning of the whole wheel is completed.

## Claims

1. A wheel lightweight machining fixture, comprising
a rotating chuck (1) for clamping a wheel, on which radial positioning blocks (6) for radial positioning of first stage turning of a wheel, axial positioning blocks (9) for axial positioning of first stage turning, and corner cylinder pressure claws (10) for pressing the wheel are uniformly distributed,
a vertical lathe I turret (11), on which an inner rim turning tool (12) for turning the inner rim of the wheel, an outer rim turning tool (13) for turning the outer rim of the wheel and a clamping base (14) are mounted, and
a vertical lathe II turret (18), on which a central hole flange turning tool (19) for turning the central hole and flange surface of the wheel and a spoke back cavity turning tool (20) for turning the spoke back cavity are mounted,
**characterized in that**
two grooves are bilaterally distributed in the rotating chuck (1), an electric cylinder (2) and a guide rail (3) are fixedly mounted in the left groove, a slide block (4) is mounted on the guide rail (3), the output end of the electric cylinder (2) is connected with the slide block (4), a linear motor I (5) is fixedly mounted on the slide block (4), an ultrasonic thickness measuring sensor I (8) is mounted at the output end of the linear motor I (5), and a piezoelectric sensor I (7) is integrated inside the ultrasonic thickness measuring sensor I (8);
wherein when the electric cylinder (2) drives the slide block (4) to move along the guide rail (3), the position where the ultrasonic thickness measuring sensor I (8) is in contact with a wheel spoke can be adjusted, so that the spoke thicknesses at different positions can be detected,
wherein the clamping base (14) is mounted on the vertical lathe I turret (11), the linear motor II (15) is mounted on the clamping base (14), an ultrasonic thickness measuring sensor II (17) is mounted at the output end of the linear motor II (15), and a piezoelectric sensor II (16) is integrated inside the ultrasonic thickness measuring sensor II (17); through motion of the turrets, the ultrasonic thickness measuring sensor II (17) can contact the outer rim of the wheel and detect the rim wall thickness.

2. The wheel lightweight machining fixture of claim 1, **characterized in that** the wheel having the front side downward and the rim upward is clamped onto the rotating chuck (1), and the wheel spoke is required to face the ultrasonic thickness measuring sensor I (8) during clamping.

3. A wheel lightweight machining method using the fixture defined in claim 1, comprising the following procedures:
(1) according to the requirement of the radial detection position of the spoke thickness, the radial position of the ultrasonic thickness measuring sensor I (8) is adjusted via the electric cylinder (2);
(2) a wheel having the front side downward and the rim upward is clamped onto the rotating chuck (1), the wheel spoke is required to face the ultrasonic thickness measuring sensor I (8) during clamping;
(3) the wheel is turned by adopting a machining program of wheel size mid-value compilation, the outer rim turning tool (13) on the vertical lathe I turret (11) turns the outer rim, the inner rim turning tool (12) turns the inner rim, the central hole flange turning tool (19) on the vertical lathe II turret (18) turns the central hole and the flange surface, and the spoke back cavity turning tool (20) turns the spoke back cavity;
(4) after turning is completed, the vertical lathe I turret (11) moves, the position of the ultrasonic thickness measuring sensor II (17) is adjusted to face the outer rim of the wheel, then, the linear motor II (15) is started to drive the ultrasonic thickness measuring sensor II (17) to approach the outer rim of the wheel, when the ultrasonic thickness measuring sensor II (17) contacts the outer rim of the wheel, the piezoelectric sensor II (16) picks up a signal, the linear motor II (15) stops moving, and at the moment, the ultrasonic thickness measuring sensor II (17) begins working and detects the rim wall thickness; when the rim wall thickness is detected, the linear motor I (5) is started to drive the ultrasonic thickness measuring sensor I (8) to approach the wheel spoke; when the ultrasonic thickness measuring sensor I (8) contacts the wheel spoke, the piezoelectric sensor I (7) picks up a signal, the linear motor II (15) stops moving, and at the moment, the ultrasonic thickness measuring sensor I (8) begins working and detects the spoke thickness;
(5) a computer compares the detected rim wall thickness and spoke thickness with minimum entity values, and feeds the differences back to a lathe as cutting depths of next precision turning;
(6) after the lathe receives cutting depth instructions, the inner rim turning tool (12) is started to precisely turn the inner rim of the wheel, and the spoke back cavity turning tool (20) is started to precisely turn the spoke back cavity; after precision turning is completed, first stage machining of the wheel is completed, and the rim wall thickness and the spoke thickness undergo minimum entity control; and
(7) finally, the wheel is transferred to a second stage lathe, and after the cap section and the remaining outer rim are turned, turning of the whole wheel is completed.

## Patentansprüche

1. Rad-Leichtbau-Bearbeitungsvorrichtung, umfassend
ein rotierendes Spannfutter (1) zum Einspannen eines Rads, auf dem radiale Positionierblöcke (6) zum radialen Positionieren der ersten Drehstufe eines Rads, axiale Positionierblöcke (9) zur axialen Positionieren der ersten Drehstufe und Eckzylinderdruckklauen (10) zum Drücken des Rads gleichmäßig verteilt sind,
eine Vertikaldrehmaschine I Revolver (11), auf dem ein Innenfelgen-Drehwerkzeug (12) zum Drehen der Innenfelge des Rads, ein Außenfelgen-Drehwerkzeug (13) zum Drehen der Außenffelge des Rads und eine Spannbasis (14) montiert sind, und
eine Vertikaldrehmaschine II Revolver (18), auf dem ein Mittelloch-Flansch-Drehwerkzeug (19) zum Drehen des Mittellochs und der Flanschfläche des Rads und ein Speichenrücken-Hohlraum-Drehwerkzeug (20) zum Drehen des Speichenrücken-Hohlraums montiert sind,
**dadurch gekennzeichnet**
**dass** im rotierenden Spannfutter (1) zwei Nuten beidseitig verteilt sind, wobei in der linken Nut ein Elektrozylinder (2) und eine Führungsschiene (3) fest montiert sind, an der Führungsschiene (3) ein Kulissenstein (4) montiert ist, wobei das Abtriebsende des Elektrozylinders (2) mit dem Kulissenstein (4) verbunden ist, ein Linearmotor I (5) fest auf dem Kulissenstein (4) montiert ist, ein Ultraschall-Dickenmesssensor I (8) am Abtriebsende des Linearmotors I (5) montiert ist und ein piezoelektrischer Sensor I (7) innerhalb des Ultraschall-Dickenmesssensors I (8) integriert ist;
wobei, wenn der Elektrozylinder (2) den Kulissenstein (4) antreibt, um sich entlang der Führungsschiene (3) zu bewegen, die Position, wo der Ultraschall-Dickenmesssensor I (8) in Kontakt mit einer Radspeiche ist, eingestellt werden kann, so dass die Speichendicken an verschiedenen Positionen erfasst werden können,
wobei die Spannbasis (14) auf den Vertikaldrehmaschine I Revolver (11) montiert ist, der Linearmotor II (15) auf der Spannbasis (14) montiert ist, ein Ultraschall-Dickenmesssensor II (17) am Abtriebsende des Linearmotors II (15) montiert ist, und ein piezoelektrischer Sensor II (16) innerhalb des Ultraschall-Dickenmesssensors II (17) integriert ist; durch die Bewegung der Revolvern kann der Ultraschall-Dickenmesssensor II (17) die äußere Felge des Rades kontaktieren und die Felgenwandstärke erfassen.

2. Rad-Leichtbau-Bearbeitungsvorrichtung nach Anspruch 1, **dadurch gekennzeichnet, dass** das Rad mit der Vorderseite nach unten und der Felge nach oben auf das rotierende Spannfutter (1) gespannt ist und die Radspeiche beim Spannen dem Ultraschall-Dickenmesssensor I (8) zugewandt sein muss.

3. Rad-Leichtbau-Bearbeitungsverfahren unter Verwendung der im Anspruch 1 definierten Vorrichtung, umfassend die folgenden Verfahren:
(1) entsprechend der Anforderung der radialen Erfassungsposition der Speichendicke wird die radiale Position des Ultraschall-Dickenmesssensors I (8) über den Elektrozylinder (2) eingestellt;
(2) ein Rad mit der Vorderseite nach unten und der Felge nach oben wird auf das rotierende Spannfutter (1) gespannt, wobei die Radspeiche beim Spannen dem Ultraschall-Dickenmesssensor I (8) zugewandt sein muss;
(3) das Rad wird gedreht, indem ein Bearbeitungsprogramm der Radgröße-Mittelwert-Zusammenstellung angenommen wird, das Außenfelgen-Drehwerkzeug (13) auf der Karusseldrehmaschine I Revolver (11) dreht die Außenfelge, das Innenfelgen-Drehwerkzeug (12) dreht die Innenfelge, das Mittelloch-Flansch-Drehwerkzeug (19) auf dem Vertikaldrehmaschine II Revolver (18) dreht das Mittelloch und die Flanschfläche, und das Speichenrücken-Hohlraum-Drehwerkzeug (20) dreht den Speichenrücken-Hohlraum;
(4) nach Abschluss des Drehens bewegt sich der Vertikaldrehmaschine I Revolver (11), die Position des Ultraschall-Dickenmesssensors II (17) wird so eingestellt, dass er der Außenfelge des Rads zugewandt ist, dann der Linearmotor II (15) gestartet wird, um den Ultraschall-Dickenmeßsensor II (17) so anzutreiben, dass er sich der Außenfelge des Radsnnähert, wenn der Ultraschall-Dickenmeßsensor II (17) die Außenfelge des Rads berührt, nimmt der piezoelektrische Sensor II (16) ein Signal auf, stoppt der Linearmotor II (15) seine Bewegung und in diesem Moment beginnt der Ultraschall-Dickenmesssensor II (17) zu arbeiten und erfasst die Felgenwanddicke; wenn die Felgenwanddicke erfasst wurde, wird der Linearmotor I (5) gestartet, um den Ultraschall-Dickenmesssensor I (8) so anzutreiben, dass er sich der Radspeiche nähert; wenn der Ultraschall-Dickenmesssensor I (8) die Radspeiche berührt, nimmt der piezoelektrische Sensor I (7) ein Signal auf, der Linearmotor II (15) stoppt seine Bewegung und in dem Moment beginnt der Ultraschall-Dickenmesssensor I (8 ) zu arbeiten und erfasst die Speichendicke;
(5) ein Computer vergleicht die erfasste Felgenwanddicke und Speichendicke mit minimalen Entitätswerten und führt die Differenzen als Schnitttiefen des nächsten Präzisionsdrehens zu einer Drehmaschine zurück;
(6) nachdem die Drehmaschine Schnitttiefenanweisungen erhalten hat, wird das Innenfelgen-Drehwerkzeug (12) gestartet, um die Innenfelge des Rads präzise zu drehen, und das Speichenrücken-Hohlraum-Drehwerkzeug (20) wird gestartet, um den Speichenrückseiten-Hohlraum präzise zu drehen; nachdem das Präzisionsdrehen abgeschlossen ist, ist die erste Bearbeitungsstufe des Rads abgeschlossen, und die Felgenwanddicke und die Speichendicke unterliegen einer minimalen Entitätssteuerung; und
(7) Schließlich wird das Rad zu einer Drehmaschine der zweiten Stufe überführt, und nachdem der Kappenabschnitt und der verbleibende Außenfelge gedreht sind, ist das Drehen des gesamten Rads abgeschlossen.

## Revendications

1. Un montage d'usinage de roue légère, comprenant
un mandrin rotatif (1) pour serrer une roue, sur lequel des blocs de positionnement radial (6) pour le positionnement radial de la première étape de tournage de la roue, des blocs de positionnement axial (9) pour le positionnement axial de la première étape de tournage, et des griffes de pression de vérin de coin (10) pour presser la roue sont uniformément répartis,
une tourelle du tour vertical I (11), sur laquelle un outil de tournage de jante intérieure (12) pour tourner la jante intérieure de la roue, un outil de tournage de jante extérieure (13) pour tourner la jante extérieure de la roue et une base de serrage (14 ) sont montés, et
une tourelle du tour vertical II (18), sur laquelle sont montés un outil de tournage de trou central et de bride (19) pour tourner le trou central et la surface de bride de la roue et un outil de tournage de cavité arrière de rayon (20) pour tourner la cavité arrière de rayon sont montés,
**caractérisé en ce que**
deux rainures sont réparties bilatéralement dans le mandrin rotatif (1), un vérin électrique (2) et un rail de guidage (3) sont montés de manière fixe dans la rainure gauche, un coulisseau (4) est monté sur le rail de guidage (3), l'extrémité de sortie du vérin électrique (2) est connectée au coulisseau (4), un moteur linéaire I (5) est monté de manière fixe sur le coulisseau (4), un capteur de mesure d'épaisseur à ultrasons I (8) est monté à l'extrémité de sortie du moteur linéaire I (5), et un capteur piézoélectrique I (7) est intégré à l'intérieur du capteur de mesure d'épaisseur à ultrasons I (8) ;
dans lequel, lorsque le vérin électrique (2) entraîne le coulisseau (4) à se déplacer le long du rail de guidage (3), la position où le capteur de mesure d'épaisseur à ultrasons I (8) est en contact avec un rayon de roue peut être ajustée, de sorte que les épaisseurs de rayon à différentes positions peuvent être détectées,
dans lequel la base de serrage (14) est montée sur la tourelle du tour vertical I (11), un moteur linéaire II (15) est monté sur la base de serrage (14), un capteur de mesure d'épaisseur à ultrasons II (17) est monté à l'extrémité de sortie du moteur linéaire II (15), et un capteur piézoélectrique II (16) est intégré à l'intérieur du capteur de mesure d'épaisseur à ultrasons II (17) ; par le mouvement des tourelles, le capteur de mesure d'épaisseur à ultrasons II (17) peut entrer en contact avec la jante extérieure de la roue et détecter l'épaisseur de la paroi de la jante.

2. Montage d'usinage de roue légère selon la revendication 1, **caractérisé en ce que** la roue ayant la face avant vers le bas et la jante vers le haut est serrée sur le mandrin rotatif (1), et le rayon de la roue doit faire face au capteur de mesure d'épaisseur à ultrasons I ( 8) pendant le serrage.

3. Procédé d'usinage de roue légère utilisant le montage défini dans la revendication 1, comprenant les procédures suivantes :
(1) selon l'exigence de la position de détection radiale de l'épaisseur de rayon, la position radiale du capteur de mesure d'épaisseur à ultrasons I (8) est ajustée via le vérin électrique (2) ;
(2) une roue ayant le côté avant vers le bas et la jante vers le haut est serrée sur le mandrin rotatif (1), le rayon de la roue doit faire face au capteur de mesure d'épaisseur à ultrasons I (8) pendant le serrage ;
(3) la roue est tournée en adoptant un programme d'usinage de compilation de valeurs moyennes de taille de roue, l'outil de tournage de jante extérieure (13) sur la tourelle du tour vertical I (11) tourne la jante extérieure, l'outil de tournage de jante intérieure (12) tourne la jante intérieure, l'outil de tournage de trou central et de bride (19) sur la tourelle du tour vertical II (18) tourne le trou central et la surface de bride, et l'outil de tournage de cavité arrière de rayon (20) tourne la cavité arrière de rayon ;
(4) une fois le tournage terminé, la tourelle du tour vertical I (11) se déplace, la position du capteur de mesure d'épaisseur à ultrasons II (17) est ajustée pour faire face à la jante extérieure de la roue, puis, le moteur linéaire II (15) est démarré pour entrainer le capteur de mesure d'épaisseur à ultrasons II (17) à s'approcher de la jante extérieure de la roue, lorsque le capteur de mesure d'épaisseur à ultrasons II (17) entre en contact avec la jante extérieure de la roue, le capteur piézoélectrique II (16) capte une signal, le moteur linéaire II (15) s'arrête de bouger, et à ce moment, le capteur de mesure d'épaisseur à ultrasons II (17) commence à fonctionner et détecte l'épaisseur de la paroi de la jante ; lorsque l'épaisseur de la paroi de la jante est détectée, le moteur linéaire I (5) est démarré pour entraîner le capteur de mesure d'épaisseur à ultrasons I (8) à s'approcher du rayon de la roue ; lorsque le capteur de mesure d'épaisseur à ultrasons I (8) entre en contact avec le rayon de la roue, le capteur piézoélectrique I (7) capte un signal, le moteur linéaire II (15) s'arrête et, à ce moment, le capteur de mesure d'épaisseur à ultrasons I (8) commence à fonctionner et détecte l'épaisseur du rayon ;
(5) un ordinateur compare l'épaisseur de la paroi de la jante et l'épaisseur du rayon détectées avec des valeurs d'entité minimales, et renvoie les différences à un tour en tant que profondeurs de coupe du tournage de précision suivant ;
(6) après que le tour a reçu des instructions de profondeur de coupe, l'outil de tournage de jante intérieure (12) est démarré pour tourner avec précision la jante intérieure de la roue, et l'outil de tournage de cavité arrière de rayon (20) est démarré pour tourner avec précision la cavité arrière de rayon ; une fois le tournage de précision terminé, l'usinage de première étape de la roue est terminé, et l'épaisseur de la paroi de la jante et l'épaisseur du rayon subissent un contrôle d'entité minimum ; et
(7) enfin, la roue est transférée à un tour de deuxième étape, et après que la partie de capuchon et la jante extérieure restante ont été tournées, le tournage de la roue entière est terminé.
